Europäisches Patentamt

European Patent Office

Office européen des brevets

(19)

(11) Veröffentlichungsnummer: **0 366 901 B1**

(12) **EUROPÄISCHE PATENTSCHRIFT**

(45) Veröffentlichungstag der Patentschrift: **02.06.93**

(21) Anmeldenummer: **89116306.5**

(22) Anmeldetag: **04.09.89**

(51) Int. Cl.⁵: **B60H 1/00**

(54) **Klimatisierungsvorrichtung für ein Kraftfahrzeug.**

(30) Priorität: **31.10.88 DE 3836992**

(43) Veröffentlichungstag der Anmeldung:
**09.05.90 Patentblatt 90/19**

(45) Bekanntmachung des Hinweises auf die
Patenterteilung:
**02.06.93 Patentblatt 93/22**

(84) Benannte Vertragsstaaten:
**DE FR GB IT SE**

(56) Entgegenhaltungen:
**EP-A- 0 243 041**
**DE-A- 3 048 626**

**PATENT ABSTRACTS OF JAPAN vol. 10, no.
388 (M-549)(2445) 25 Dezember 1986, & JP-
A-61 178213 (NIPPON DENSO CO LTD) 9 August 1986,**

(73) Patentinhaber: **Dr.Ing.h.c. F. Porsche Aktiengesellschaft**
**Porschestrasse 42**
**W-7000 Stuttgart 40(DE)**

(72) Erfinder: **Burst, Hermann, Dipl.-Ing.**
**Telemannstrasse 4**
**W-7255 Rutesheim(DE)**
Erfinder: **Pross, Walter, Dipl.-Ing.**
**Parkstrasse 23**
**W-7032 Sindelfingen(DE)**

Anmerkung: Innerhalb von neun Monaten nach der Bekanntmachung des Hinweises auf die Erteilung des
europäischen Patents kann jedermann beim Europäischen Patentamt gegen das erteilte europäische Patent
Einspruch einlegen. Der Einspruch ist schriftlich einzureichen und zu begründen. Er gilt erst als eingelegt, wenn
die Einspruchsgebühr entrichtet worden ist (Art. 99(1) Europäisches Patentübereinkommen).

## Beschreibung

Die Erfindung betrifft ein Klimatisierungssystem für ein Kraftfahrzeug nach der Gattung des Anspruchs 1.

Bei Kraftfahrzeugen, welche mit Brennkraftmaschinen ausgestattet sind, wird häufig die von der Brennkraftmaschine erzeugte Abwärme (Verlustwärme) zum Beheizen des Fahrgastraumes verwendet. Die dem Kühlkreislauf oder dem Abgas der Brennkraftmaschine entnommene Abwärme wird in einem Klimatisierungssystem über zumindest einen Wärmetauscher zum Beheizen eines Luftstroms verwendet, welcher dem Fahrgastraum zugeführt wird.

Seit einiger Zeit werden Kraftfahrzeuge jedoch zunehmend mit verbrauchsoptimierten Antriebssystem-Konzepten ausgestattet; diese umfassen beispielsweise ein Kraftstoff-Luft-Gemisch-Zufuhrsystem mit einer Kraftstoffabschneidung im Schubbetrieb. Da bei Kraftfahrzeugen in Schubbetriebsphasen in der Brennkraftmaschine naturgemäß keine Energie aus dem Kraftstoff umgesetzt wird, kann für Heizwärme lediglich Reibungswärme und gespeicherte Wärme benutzt werden. Wird die Heizwärme dem Abgas entnommen, so entfällt die Nutzung gespeicherter Wärme praktisch vollständig.

Es ist Aufgabe der Erfindung, eine Klimatisierungsvorrichtung für Kraftfahrzeuge zu schaffen, welche eine gute Behaglichkeit im Fahrgastraum ohne nennenswerte lastabhängige Temperaturschwankungen erreicht.

Die Erfindung ist durch die kennzeichnenden Merkmale des Anspruchs 1 gelöst. Besonders vorteilhafte Ausgestaltungen der Erfindung ergeben sich mit dem Anspruch 2 und den Unteransprüchen.

Die Vorteile der Erfindung sind in erster Linie darin zu sehen, daß eine Klimatisierungsvorrichtung für Kraftfahrzeuge geschaffen ist, welche einem Fahrgastraum zum Erreichen einer guten Behaglichkeit rasch auf ein gewünschtes Temperaturniveau aufheizt und dieses ohne nennenswerte lastabhängige Temperaturschwankungen hält.

Dies wird in erster Linie dadurch erreicht, daß bei einer erhöhten Wärmeanforderung eine Kraftstoffabschneidung im Schubbetrieb der Brennkraftmaschine wenigstens zeitweise unterbunden wird. Dabei kann die erhöhte Wärmeanforderung gekennzeichnet sein durch eine Stellung eines die Beheizung des Fahrgastraums beeinflussenden Stellelements, insbesondere durch eine Stellung im Bereich eines Maximalwerts (maximal beheizen).

Die Erfindung wird nachstehend anhand von in den Zeichnungen dargestellten Ausführungsformen näher erläutert.
Es zeigt

Fig. 1     eine Klimatisierungsvorrichtung nach der Erfindung,

Fig. 2     eine Klimatisierungsvorrichtung nach Fig. 1, jedoch in einer anderen Ausgestaltung.

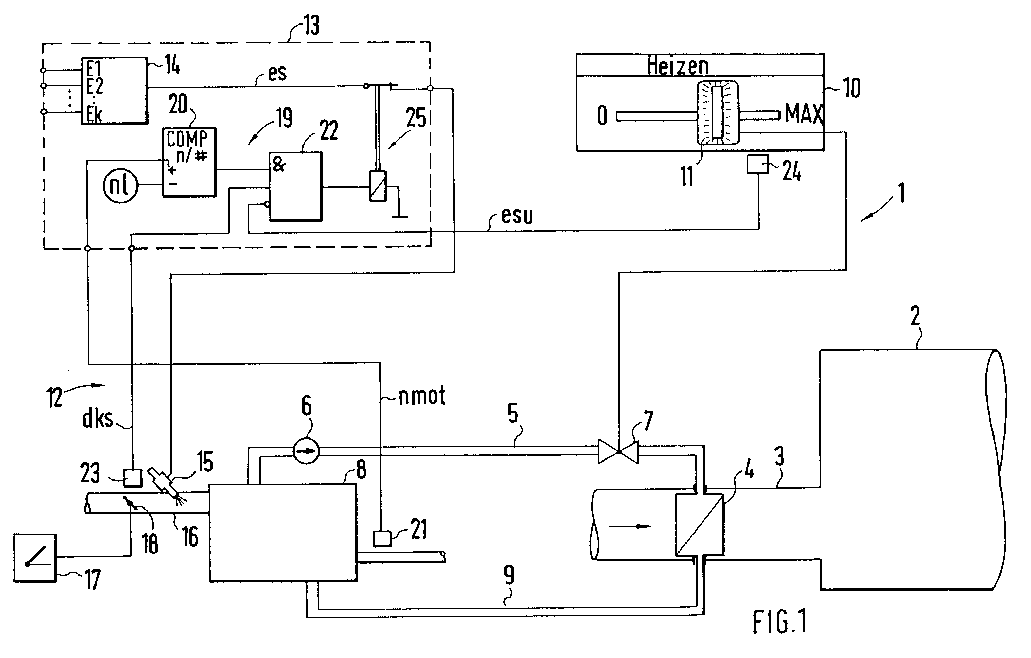

In Fig. 1 ist mit 1 eine steuerbare Klimatisierungsvorrichtung für einen Fahrgastraum 2 eines nicht gezeigten Kraftfahrzeugs dargestellt (ohne Einschränkung der Allgemeinheit bekannter Klimatisierungsvorrichtungen ist eine wasserseitig geregelte Heizung gezeigt).

In einem zum Fahrgastraum 2 hinführenden Luftkanal 3 ist ein Wärmetauscher 4 angeordnet, dem über einen Vorlauf 5 mit einer Pumpe 6 und einem Heizungsventil 7 ein von der Abwärme der Brennkraftmaschine 8 erwärmtes Kühlmittel zugeführt werden kann, welches nach Passieren des Wärmetauschers 4 abgekühlt der Brennkraftmaschine 8 über einen Rücklauf 9 wieder zugeführt wird. Das Heizungsventil 7 ist mittels eines Stellelements 10 (Bedienungshebel 11) in seinem Öffnungsgrad steuerbar.

Ein Kraftstoff-Luft-Gemisch-Zufuhrsystem 12 umfaßt ein bekanntes Steuergerät 13 mit einer Steuereinheit 14, welche aufgrund mehrerer Eingangssignale E1, E2, ..., Ek (beispielsweise Motorlast, Motordrehzahl nmot, Drosselklappenstellung dks, Motortemperatur usw.) ein Kraftstoffeinspritzsignal es erzeugt. Das Kraftstoffeinspritzsignal es steuert ein Einspritzventil 15 an, das Kraftstoff nach Maßgabe des Signals es in ein Saugrohr 16 der Brennkraftmaschine mit einer von einem Fahrpedal 17 angesteuerten Drosselklappe 18 abspritzt.

Das Steuergerät 13 umfaßt eine - symbolisch dargestellte - Kraftstoff-Abschneideschaltung 19, welche normalerweise bereits in der Steuereinheit 17 integriert ist; die Darstellung beinhaltet einen ersten Komparator 20, welcher die mit einem Drehzahlsensor 21 erfaßte Motordrehzahl nmot mit einem Schwellwert nl vergleicht und bei Überschreiten des für die Kraftstoffabschneidung maßgeblichen Schwellwerts nl ein Signal an ein nachfolgendes UND-Glied 22 abgibt.

Das UND-Glied 22 ist weiters über einen Eingang mit einem Drosselklappenschalter 23, welcher bei geschlossener Drosselklappe 18 ein Signal abgibt und über einen negierenden Eingang mit einem Positionsdetektor 24 verbunden, welcher eine Stellung des Stellelements 10 (Bedienungshebel 11) im Bereich des Maximalwerts MAX (maximal heizen) abtastet und hierbei gegebenenfalls ein Unterbindungssignal esu abgibt. Der Positionsdetektor weist vorzugsweise eine Schalthysterese auf, so daß er beispielsweise bei 90 % des Maximalwertes MAX einschaltet, aber erst wieder bei 80 % von MAX ausschaltet.

Ein vom UND-Glied 22 gesteuertes Relais 25 unterbricht das Kraftstoffeinspritzsignal es, sofern sowohl das Signal des Komparators 20 als auch das Signal dks des Drosselklappenschalters 23 gleichzeitig bei Nichtvorliegen des Unterbindungssignals esu an den Eingängen des UND-Glieds 22 anliegen. Das UND-Glied 22 bildet hierbei gemeinsam mit dem Positionsdetektor 24 eine Schalteinrichtung zur Unterbindung der Kraftstoffabschneidung im Schubbetrieb der Brennkraftmaschine 8, sofern die Stellung des Stellelements 10 im Bereich des Maximalwerts MAX liegt.

Selbstverständlich kann die Kraftstoffabschneidung ebenso von weiteren Betriebszuständen der Brennkraftmaschine 8 oder des Fahrzeugs abhängen, wie auch das Kraftstoff-Luft-Gemisch-Zufuhrsystem ein Vergaser sein kann. Das Einspritzventil 15 ist dann durch ein Kraftstoff-Abschaltventil ersetzt zu denken, das anstatt von der Steuereinheit 14 direkt mit Betriebsstrom (aus dem Zündstromkreis) gespeist wird (nicht gezeigt).

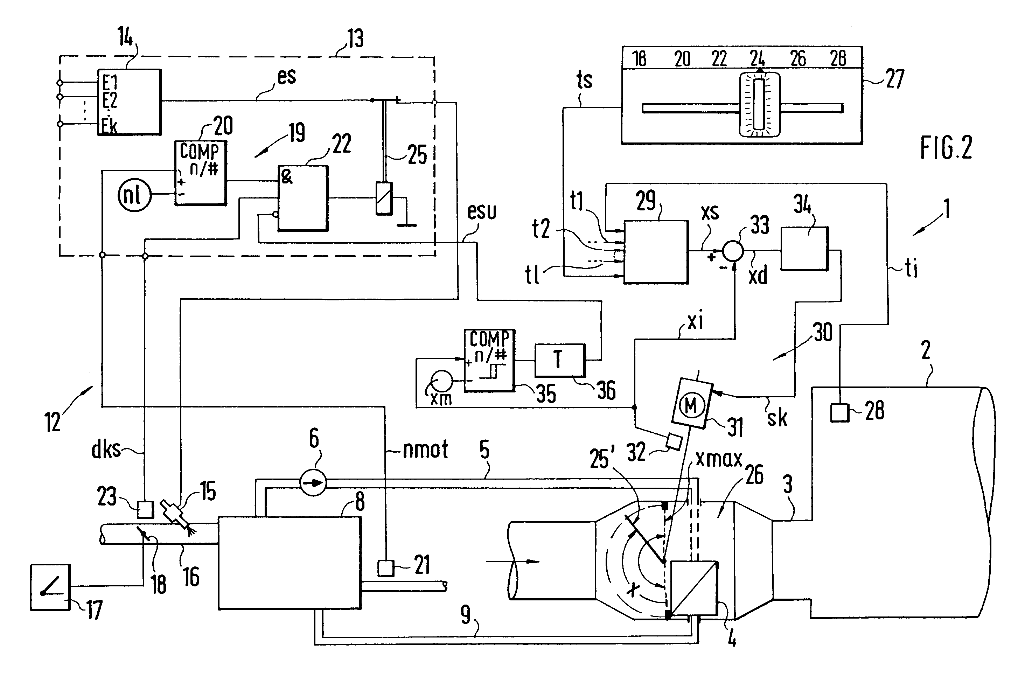

Eine Klimatisierungsvorrichtung mit selbsttätiger Temperaturregelung ist in Fig. 2 - wiederum ohne Beschränkung der Allgemeinheit - am Beispiel einer luftseitig geregelten Heizung gezeigt. Die Beheizung des Innenraums wird hierbei von einer Temperaturmischklappe 25' als Stellelement beeinflußt, welche den dem Fahrgastraum 2 zugeführten Luftstrom in einer Temperaturmischkammer 26 entweder vollständig oder teilweise durch den Wärmetauscher 4 führt oder an diesem teilweise oder vollständig vorbeileitet.

Über eine Sollwertvorgabeeinheit 27 kann eine Solltemperatur ts vorgegeben werden. Aus dieser Solltemperatur ts und einer Fahrgastraumtemperatur ti, welche mittels eines Temperaturfühlers 28 im Fahrgastraum 2 erfaßt wird und eventuell weiterer Eingangssignale t1, t2, ..., tl (Außentemperatur usw.) ermittelt ein Sollwertrechner 29 (beispielsweise aus der Temperaturdifferenz (ts-ti)) eine Sollstellung xs des Stellelements Temperaturmischklappe 25'.

Eine Stellungsregelkreis 30 mit einem Stellmotor 31 stellt die Stellung x der Temperaturmischklappe 25' entsprechend der Sollstellung xs ein; hierzu wird die Iststellung xi der Temperaturmischklappe 25' mittels eines Positionsdetektors 32 erfaßt. Ein Vergleicher 33 vergleicht die Sollstellung xs und die Iststellung xi (Regeldifferenz xd = xs-xi); aus der Regeldifferenz xd wird schließlich vom Regler mit Steuerelektronik 34 ein Ansteuersignal sk für den Stellmotor 31 bereitgestellt.

Die Iststellung xi (oder alternativ hierzu die Sollstellung xs) wird im zweiten Komparator 35 mit einem Schwellwert xm (welcher beispielsweise bei 90 % des Maximalwerts xmax der Stellung x liegt,) verglichen; der Komparator 35 kann auch eine Schalthysterese aufweisen, derart, daß das Unterbindungssignal esu immer dann abgegeben wird, wenn ein erster höherliegender Schwellwert xmo (90 % max) bereits überschritten, ein zweiter niedrigerer Schwellwert xmu (80 % von max) jedoch noch nicht unterschritten ist. Mit dem Ausgangssignal esu des zweiten Komparators 35 wird dann das UND-Glied 22 entweder direkt oder über eine Verzögerungsschaltung 36 beaufschlagt. Die Verzögerungsschaltung 36 gibt hierbei ein Signal des zweiten Komparators 35 erst dann an das UND-Glied 22 ab, wenn dieses mindestens für eine charakteristische Zeit T anliegt; dies dient insbesondere der Schaltberuhigung.

Selbstverständlich kann die hier gezeigte Klimatisierungsvorrichtung auch bei wasserseitig geregelten Heizungen eingesetzt werden. Ein bevorzugter Anwendungsfall sind jedoch luftseitig geregelte Heizungssysteme, bei denen die zum Beheizen notwendige Energie dem Abgas der - insbesondere luftgekühlten - Brennkraftmaschine 8 entnommen wird. Der Vorlauf 5 entspricht dann einem Abgasrohr der Brennkraftmaschine 8, die Pumpe 6 und der Rücklauf 9 entfallen und der Austritt des Wärmeträgermediums Abgas aus dem Wärmetauscher 4 endet im Auspuffsystem oder im Freien.

## Patentansprüche

1. Klimatisierungsvorrichtung für ein Kraftfahrzeug mit einer Brennkraftmaschine, deren Kraftstoff-Luftgemisch- Zufuhrsystem mit einer Kraftstoffabschneidung im Schubbetrieb versehen ist, wobei die Klimatisierungsvorrichtung steuerbar ist und die von der Brennkraftmaschine erzeugte Abwärme zum Beheizen wenigstens eines Fahrgastraums des Kraftfahrzeugs umsetzt und ein die Beheizung des Fahrgastraums des Kraftfahrzeugs mittelbar oder unmittelbar beeinflussendes Stellelement aufweißt, wobei die Stellung des Stellelements entsprechend einer Wärmeanforderung beliebig zwischen einem Minimalwert (nicht Beheizen) und einem Maximalwert (maximal Beheizen) verstellbar ist, **dadurch gekennzeichnet,** daß bei einer Stellung (x, xi, xs) des Stellelements (10, 25') in einem Bereich des Maximalwerts die Kraftstoffabschneidung (19) im Schubbetrieb wenigstens zeitweise unterbunden wird.

2. Klimatisierungsvorrichtung für ein Kraftfahrzeug mit einer Brennkraftmaschine, deren Kraftstoff-Luftgemisch- Zufuhrsystem mit einer Kraftstoffabschneidung im Schubbetrieb versehen ist, wobei die Klimatisierungsvorrichtung steuerbar ist und die von der Brennkraftmaschine erzeugte Abwärme zum Beheizen wenigstens eines Fahrgastraums des Kraftfahrzeugs umsetzt und ein die Beheizung des Fahrgastraums des Kraftfahrzeugs mittelbar oder unmittelbar beeinflussendes Stellelement aufweißt, wobei die Stellung des Stellelements entsprechend einer Wärmeanforderung beliebig zwischen einem Minimalwert (nicht Beheizen) und einem Maximalwert (maximal Beheizen) verstellbar ist, insbesondere nach Anspruch 1, **dadurch gekennzeichnet,** daß die Klimatisierungsvorrichtung (1) ein von der Stellung (x, xi, xs) des Stellelements (10, 25') beeinflußte Schalteinrichtung (22, 24; 22, 32, 35-36) umfaßt, welche bei einer in einem Bereich des Maximalwerts liegenden Stellung (x, xi, xs) des Stellelements (10, 25') eine Unterbindung der Kraftstoffabschneidung (19) im Schubbetrieb wenigstens zeitweise ansteuert.

3. Klimatisierungsvorrichtung nach Anspruch 1 oder 2, **dadurch gekennzeichnet,** daß das Stellelement (10) ein Bedienungshebel (11) für die Einstellung einer Position einer Temperaturmischklappe (25') oder eines Öffnungsgrads eines Heizungsventils (7) ist.

4. Klimatisierungsvorrichtung nach Anspruch 1 oder 2, **dadurch gekennzeichnet,** daß das Stellelement eine Temperaturmischklappe (25') oder ein Heizungsventil (7) ist.

5. Klimatisierungsvorrichtung nach Anspruch 3 oder 4, **dadurch gekennzeichnet,** daß die Schalteinrichtung (22, 32, 35-36) bei einer in einem Bereich des Maximalwerts liegenden Stellung (x, xi,xs) des Stellelements (10, 25') eine Unterbindung der Kraftstoffabschneidung (19) im Schubbetrieb erst nach Ablauf einer bestimmten Zeitspanne (T) angesteuert wird.

6. Klimatisierungsvorrichtung nach Anspruch 3, 4 oder 5, **dadurch gekennzeichnet,** daß die Klimatisierungsvorrichtung (1) ein einen Sollwert (xs) für das Stellelement (25') ansteuernden ersten Sollwertrechner (29) umfaßt, welcher bei einem im Bereich des Maximalwerts bestimmten Sollwert (xs) für die Stellung (x) des Stellelements (25') ein Signal (esu) an ein Steuergerät (13) zur Steuerung der Kraftstoffzufuhr zur Brennkraftmaschine (8) abgibt, aufgrunddessen das Steuergerät (13) die Kraftstoffabschneidung (19) im Schubbetrieb unterbindet.

7. Klimatisierungsvorrichtung nach wenigstens einem der vorangehenden Ansprüche, **dadurch gekennzeichnet,** daß die Schalteinrichtung (22, 24; 22, 32, 35-36) eine Schalthysterese aufweist.

## Claims

1. An air-conditioning device for a motor vehicle with an internal combustion engine, the fuel-air mixture feed system of which is provided with a fuel cut-off device in load operation, the air-conditioning device being controllable and converting the waste heat produced by the internal combustion engine into heating for at least one passenger area of the motor vehicle, and having a regulating member indirectly or directly controlling the heating of the passenger area of the motor vehicle, the position of the regulating member being adjustable according to heat requirement to any setting between a minimum value (no heating) and a maximum value (maximum heating), **characterised in that** at a position (x, xi, xs) of the regulating member (10, 25') in the region of the maximum value, the fuel cut-off device (19) is at least periodically blocked in load operation.

2. An air-conditioning device for a motor vehicle with an internal combustion engine, the fuel-air mixture feed system of which is provided with a fuel cut-off device in load operation, the air-conditioning device being controllable and converting the waste heat produced by the internal combustion engine into heating for at least one passenger seating area of the motor vehicle, and having a regulating member indirectly or directly controlling the heating of the passenger area of the motor vehicle, the position of the regulating member being adjustable according to heat requirement to any setting between a minimum value (no heating) and a maximum value (maximum heating), in particular according to claim 1, **characterised in that** the air-conditioning device (1) includes an actuating device (22, 24; 22, 32, 35-36) controlled by the position (x, xi, xs) of the regulating member (10, 25') and, at a position (x, xi, xs) of the regulating member (10, 25') in the region of the maximum value, triggering at least periodically a blocking of the fuel cut-off device (19) in load operation.

3. An air-conditioning device according to claim 1 or 2, **characterised in that** the regulating member (10) is a control lever (11) for adjustment of the position of a temperature-mixing flap (25') or of the degree of opening of a heating valve (7).

4. An air-conditioning device according to claim 1 or 2, **characterised in that** the regulating member is a temperature-mixing flap (25') or a heating valve (7).

5. An air-conditioning device according to claim 3 or 4, **characterised in that** the actuating device (22, 32, 35-36) at a position (x, xi, xs) of the regulating member (10, 25') in the region of the maximum value triggers[1] a blocking of the fuel cut-off device (19) in load operation after a certain period of time (T) has elapsed.

6. An air-conditioning device according to claim 3, 4 or 5, **characterised in that** the air-conditioning device (1) comprises a first nominal-value computer (29) triggering a nominal value (xs) for the regulating member (25') and, at a nominal value (xs) - specified in the region of the maximum value - for the position (x) of the regulating member (25'), delivering a signal (esu) to a control device (13) for controlling the fuel feed to the internal combustion engine (8), and on the basis of the said signal the control device (13) blocks the fuel cut-off device (19) in load operation.

7. An air-conditioning device according to at least one of the preceding claims, **characterised in that** the actuating device (22, 24; 22, 32, 35-36) has an actuating hysteresis.

**Revendications**

1. Dispositif de climatisation pour un véhicule automobile comportant un moteur à combustion interne, dont le système d'alimentation en mélange carburant-air est pourvu d'une coupure de carburant en régime de freinage moteur, le dispositif de climatisation étant commandable et convertissant la chaleur produite par le moteur à combustion interne pour chauffer au moins l'habitacle du véhicule et comportant un élément de réglage influençant directement ou indirectement le chauffage de l'habitacle du véhicule, la position de l'élément de réglage étant réglable suivant la chaleur voulue, à volonté entre une valeur minimale (sans chauffage) et une valeur maximale (chauffage maximal), caractérisé en ce que dans une position (x, xi, xs) de l'élément de réglage (10, 25'), la coupure de carburant (19) en régime de freinage moteur est au moins temporairement interdite, dans une zone de la valeur maximale.

2. Dispositif de climatisation pour un véhicule automobile avec un moteur à combustion interne, dont le système d'alimentation en mélange carburant-air est pourvu d'une coupure de carburant en régime de freinage moteur, le dispositif de climatisation étant commandable et convertissant la chaleur produite par le moteur à combustion interne pour chauffer au moins l'habitacle du véhicule et comportant un élément de réglage influençant directement ou indirectement le chauffage de l'habitacle du véhicule, la position de l'élément de réglage étant réglable suivant la chaleur voulue, à volonté entre une valeur minimale (sans chauffage) et une valeur maximale (chauffage maximal), en particulier selon la revendication 1, caractérisé en ce que le dispositif de climatisation (1) comporte un dispositif de commutation (22, 24 ; 22, 32, 35, 36), influencé par la position (x, xi, xs) de l'élément de réglage (10, 25'), et qui pour une position (x, xi, xs) de l'élément de réglage (10, 25'), dans la zone de la valeur maximale, commande au moins temporairement une interdiction de la coupure de carburant (19) en régime de freinage moteur.

3. Dispositif de climatisation selon la revendication 1 ou 2, caractérisé en ce que l'élément de réglage (10) est un levier de commande (11) pour le réglage d'une position d'un clapet de mélange de températures (25') ou d'un degré d'ouverture d'une soupape de chauffage (7).

4. Dispositif de climatisation selon la revendication 1 ou 2, caractérisé en ce que l'élément de réglage est un clapet de mélange de températures (25') ou une soupape de chauffage (7).

5. Dispositif de climatisation selon la revendication 3 ou 4, caractérisé en ce que le dispositif de commutation (22, 32, 35-36), pour une position (x, xi, xs) de l'élément de réglage (10, 25'), dans la zone de la valeur maximale, commande une interdiction de la coupure de carburant (19) en régime de freinage moteur, uniquement à l'expiration d'un intervalle de temps (T) déterminé.

6. Dispositif de climatisation selon la revendication 3, 4 ou 5, caractérisé en ce que le dispositif de climatisation (1) comprend un premier calculateur de valeur de consigne (29), commandant une valeur de consigne (xs) pour l'élément de réglage (25'), lequel calculateur délivre un signal (esu) à un appareil de commande (13), dans le cas d'une valeur de consigne (xs) dans la zone de la valeur maximale, pour la position (x) de l'élément de réglage (25'), en vue de commander l'alimentation en carburant du moteur à combustion interne (8), sur la base duquel l'appareil de commande (13) interdit la coupure de carburant (19) en régime de freinage moteur.

7. Dispositif de climatisation selon l'une au moins des revendications précédentes, caractérisé en ce que le dispositif de commutation (22, 24 ; 22, 32, 35-36) présente une hystérésis.

FIG.1

EP 0 366 901 B1

FIG.2

EP 0 366 901 B1